Europäisches Patentamt

(19) European Patent Office

Office européen des brevets

(11) Numéro de publication: **0 228 317**
**B1**

(12) **FASCICULE DE BREVET EUROPEEN**

(45) Date de publication du fascicule du brevet:
25.04.90

(21) Numéro de dépôt: **86402508.5**

(22) Date de dépôt: **12.11.86**

(51) Int. Cl.⁴: **G09G 3/36, H04N 3/12**

(54) **Ecran de visualisation électrooptique à transistors de commande.**

(30) Priorité: **15.11.85 FR 8516935**

(43) Date de publication de la demande:
**08.07.87 Bulletin 87/28**

(45) Mention de la délivrance du brevet:
**25.04.90 Bulletin 90/17**

(84) Etats contractants désignés:
**DE GB NL**

(56) Documents cités:
**EP-A- 0 145 520**

(73) Titulaire: **THOMSON-CSF, 51, Esplanade du Général de Gaulle, F-92800 Puteaux(FR)**

(72) Inventeur: **Gay, Michel, THOMSON-CSF SCPI 19, avenue de Messine, F-75008 Paris(FR)**

(74) Mandataire: **Mayeux, Michèle et al, THOMSON-CSF SCPI, F-92045 PARIS LA DEFENSE CEDEX 67(FR)**

## Description

L'invention concerne un écran de visualisation électrooptique à transistors de commande et plus particulièrement un écran plat dans lequel la commande de chaque élément d'image à visualiser se fait à l'aide d'un transistor de commande. Elle est applicable à la réalisation d'écrans plats à cristal liquide de grande surface dont les points de commande se font par intégration sous formes de couches minces.

Comme il est connu, ces écrans comportent généralement un grand nombre de points élémentaires ou éléments d'image de forme carrée ou rectangulaire. Ces éléments d'image doivent être adressés individuellement. La définition de l'écran est fonction du nombre de points susceptibles de recevoir une information. La commande de chaque point se fait par application d'un champ électrique à travers le cristal liquide. Pour la visualisation d'informations alphanumériques ou graphiques, il a été proposé des affichages de type matriciel. Chaque élément d'image est alors défini par l'intersection de deux réseaux de conducteurs orthogonaux appelés lignes et colonnes.

L'adressage de ces écrans matriciels de visualisation revêt une importance de plus en plus considérable au fur et à mesure qu'on cherche à en augmenter la définition, c'est-à-dire le nombre de points élémentaires d'image.

Les points élémentaires étant adressés séquentiellement ligne par ligne, le nombre de lignes pouvant être adressés est en général limité par les caractéristiques de l'effet électrooptique du cristal liquide utilisé. La possibilité d'adresser un grand nombre de lignes (>100) se fait alors au détriment des autres caractéristiques de l'écran (diminution du contraste et augmentation de la dépendance angulaire). Pour améliorer les performances de ces écrans, on peut mettre en série avec chaque point image (constituant une capacité) un transistor ou un élément non linéaire. L'ensemble se comporte alors comme un élément mémoire.

Actuellement, les exigences de la technique en matière d'écran de visualisation portent sur une meilleure définition de l'image. Dans le cas des écrans du type à affichage matriciel, on est alors amené à concevoir des dispositifs comportant un nombre élevé de lignes ou de colonnes d'adressage. Leur nombre peut aller jusqu'à 1024 voire au-delà. Ceci augmente d'autant le nombre de transistors de commande. Pour la fabrication en série, il est nécessaire notamment d'obtenir un rendement élevé, une bonne reproductibilité et une grande stabilité de ces composants. Il est en outre nécessaire d'adapter, et ce également avec une bonne reproductibilité, les caractéristiques électriques du composant à celle de la cellule associée.

Une manière maintenant usuelle de résoudre ce problème consiste à réaliser cet adressage à l'aide d'une matrice de transistors en couches minces : ceci revient à coupler directement l'effet électrooptique sur un "circuit intégré" géant mais de basse résolution, chargé d'assurer les fonctions d'aiguillage et de mémorisation de l'information.

Cette approche présente des difficultés technologiques certaines, dans la réalisation tant des transistors en couches minces que des niveaux conducteurs d'interconnexion ; en particulier, il est impératif que, parmi les très nombreux croisements entre les lignes et les colonnes du réseau d'interconnexion, aucun ne soit défectueux.

En effet, selon une technique usuelle, les transistors sont situés aux points de croisement de conducteurs de ligne et de conducteurs de colonne isolés entre eux, de telle façon qu'une différence de potentiel appropriée appliquée entre une ligne et une colonne détermine la conduction du transistor connecté entre cette ligne et cette colonne.

Cependant, ce mode de réalisation tel qu'il est décrit dans le brevet américain N° 3 824 003 publié le 16 juillet 1974, peut donner lieu à des court-circuits entre une ligne et une colonne rendant inopérante la cellule à cristal liquide située au point de croisement entre cettre ligne et cette colonne.

Pour éviter ce risque de court-circuit, il a été proposé, tel que cela est décrit dans la demande de brevet français N° 2 553 218 publiée le 12 avril 1985 de supprimer tout croisement entre un conducteur de ligne et un conducteur de colonne sur la même face d'une cellule à cristal liquide. Pour cela, il a été prévu de dédoubler les conducteurs de lignes sur la face de la cellule portant les transistors et de reporter les conducteurs de colonne sur l'autre face de la cellule à cristal liquide. Dans ces conditions, à chaque ligne de transistors sont associés deux conducteurs de ligne. Un transistor a, par exemple sa grille connectée à l'un des conducteurs de ligne, sa source connectée à l'autre conducteur de ligne et son drain connecté au conducteur de colonne par l'intermédiaire de la cellule à cristal liquide.

Cependant, cette solution présente l'inconvénient de doubler le nombre de conducteurs de ligne. De plus, cette augmentation de conducteurs de ligne accroît la difficulté d'accès aux extrémités de ces conducteurs.

L'invention concerne donc une disposition permettant de pallier ces inconvénients en simplifiant la structure des matrices d'adressage à transistors à couches minces.

L'invention concerne donc un écran de visualisation électrooptique à transistors de commande comportant :
- une première et une deuxième lames parallèles enserrant un matériau électrooptique ;
- la première lame étant munie sur sa face en contact avec le matériau électrooptique d'une matrice d'électrodes arrangées en lignes et colonnes, de conducteurs de commande de ligne à raison d'un conducteur associé à chaque ligne d'électrodes de ladite matrice et disposé parallèlement à chaque ligne d'électrodes, et de transistors de commande à raison d'un transistor par électrode couplant celle-ci audit conducteur de commande de ligne ;
- la deuxième lame étant munie sur sa face en contact avec le matériau électrooptique de conducteurs de colonnes correspondant chacun à une colonne de la matrice d'électrodes de la face de la première lame ;
- chaque transistor de commande possédant au moins un drain, une grille et une source, l'écran plat de visualisation étant en outre muni de circuits d'alimentation desdits drain, grille et source, caractérisé en ce que chaque transistor de commande a son drain connecté à une électrode d'une ligne de la première matrice, sa grille connectée au conducteur de commande de ligne associé à ladite ligne d'électrodes et que la source est connectée à un conducteur de commande de ligne voisin du précédent ; et qu'il comporte :
- un circuit séquentiel d'alimentation de ligne permettant de connecter, à chaque instant, le circuit d'alimentation de grille à un conducteur de commande de ligne tandis que le circuit d'alimentation de source est connecté audit conducteur de commande de ligne voisin, ainsi qu'un circuit de connexion permettant de connecter le circuit d'alimentation de drain aux conducteurs de colonnes.

Les différents objets et caractéristiques de l'invention vont maintenant être détaillés en se reportant aux figures annexées qui représentent :

- la figure 1, un schéma simplifié d'une matrice de commande d'un écran à cristal liquide selon l'art connu, dans lequel les conducteurs de commande de ligne et de colonne se croisent sur la même face de la cellule à cristal liquide ;
- la figure 2, un schéma simplifié d'une matrice de commande d'un écran à cristal liquide selon l'art connu, dans lequel les conducteurs de commande de ligne et de colonne sont séparés par les cellules de cristal liquide ;
- la figure 3, une vue en perspective d'un exemple de réalisation d'un écran à cristal liquide selon l'art connu, conforme au schéma de la figure 1 ;
- les figures 4 et 5, des schémas simplifiés équipés de condensateur de stockage de points de croisement selon l'art connu ;
- la figure 6, un schéma simplifié d'une matrice de commande d'un écran à cristal liquide selon l'invention ;
- la figure 7, un schéma simplifié d'une variante d'une matrice de commande d'un écran à cristal liquide selon l'invention ;
- la figure 8, une vue en perspective d'un écran à cristal liquide selon l'art connu, conforme au schéma de la figure 6.
- la figure 9, un schéma simplifié d'un circuit d'alimentation d'un écran de visualisation selon l'invention ;
- la figure 10, un schéma simplifié d'une variante d'un circuit d'alimentation selon l'invention ;
- la figure 11, un exemple de réalisation d'un point de croisement d'un écran de visualisation selon l'invention.

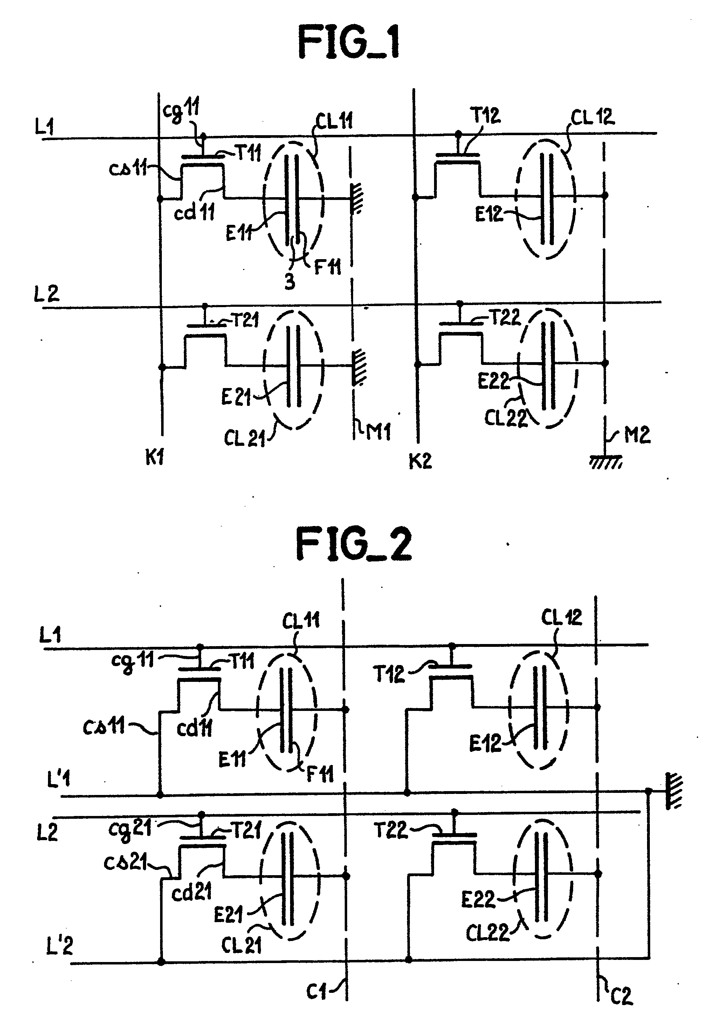

En se reportant à la figure 1, on va tout d'abord décrire un schéma simplifié d'une matrice de commande à transistors d'un écran à cristal liquide.

Comme cela est connu dans la technique, un écran à cristal liquide comporte essentiellement deux plaques en verre enserrant un cristal liquide. Les faces internes de ces plaques, en contact avec le cristal liquide, portent les circuits de l'écran à cristal liquide.

La matrice de commande de l'écran est située sur l'une de ses faces. Elle comporte comme représenté en figure 1, des conducteurs de lignes L1 et L2 et des conducteurs de colonnes K1 et K2. Les conducteurs de lignes et de colonnes se croisent sans qu'il y ait connexion entre eux. A chaque croisement entre un conducteur de ligne et un conducteur de colonne est connecté un transistor ayant sa grille connectée à une ligne et sa source à une colonne. Ainsi, au croisement de la ligne L1 et de la colonne K1 est connecté un transistor T11 possédant une grille connectée par une connexion de grille cg 11 à la ligne L1 et une source connectée par une connexion de source cs11 à la colonne K1. Sur la même face de l'écran que les lignes L1, L2, colonnes K1, K2 et transistors T11 sont implantés des électrodes métalliques au croisement de chaque ligne et chaque colonne. Chacune de ces électrodes est connectée au drain d'un transistor précédemment décrit. C'est ainsi, qu'au croisement de la ligne L1 et de la colonne K1, une électrode E11 est connectée par une connexion de drain cd11 au drain du transistor T11.

Sur l'autre face de l'écran, en vis-à-vis de chaque électrode, telle que E11 est implantée une électrode. Cette électrode est connectée à la masse. En pratique, toutes les électrodes de cette face, étant connectées à la masse, sont constituées d'une seule plaque de masse.

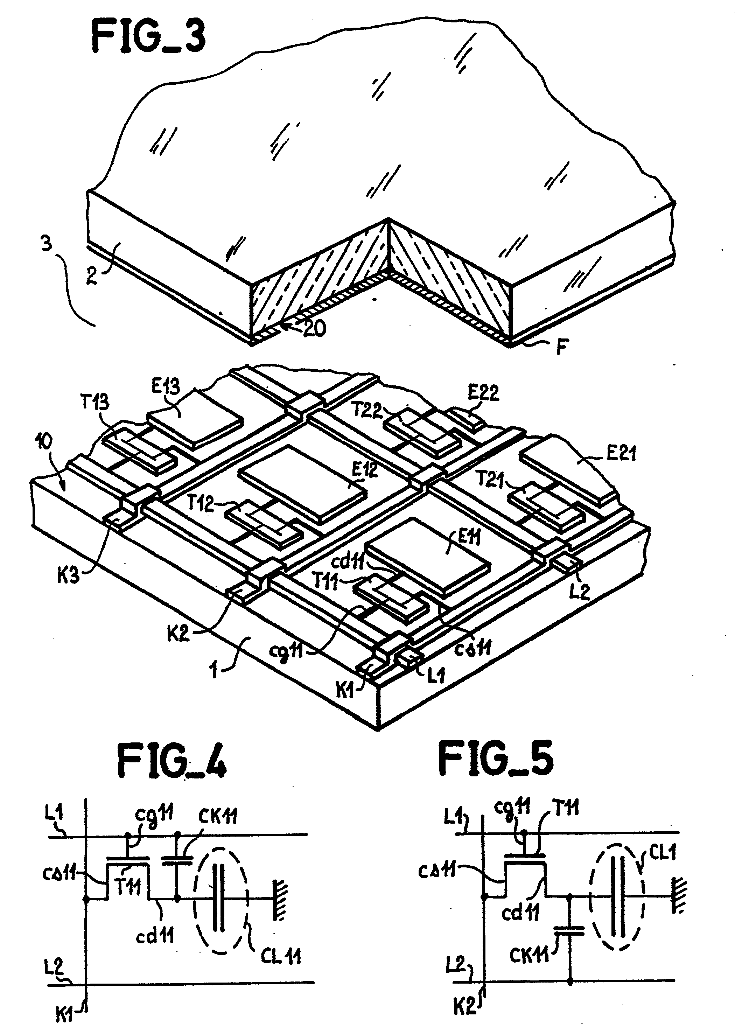

Une telle configuration d'écran est représentée en perspective sur la figure 3. Sur cette figure on trouve sur une face 10 d'une première lame 1 les conducteurs de ligne L1 et L2, les conducteurs de colonnes K1, K2 et K3. Connectés sensiblement à chaque point de croisement, on trouve également des transistors et des électrodes tels que le transistor T11 et l'électrode E11 situés au croisement du conducteur de ligne L1 et du conducteur de colonne K1.

Une deuxième lame 2, de préférence en verre, détermine avec une de ces faces 20 et la face 10 de la lame 1, un espace 3 dans lequel est placé un cristal liquide.

La face 20 une plaque de masse également transparente. Une électrode de la face 10 telle que E11, la plaque de masse en vis-à-vis et le cristal liquide qui les séparent constituent une cellule à cristal liquide CL11 de l'écran.

Le fonctionnement d'un tel écran est connu. Rappelons simplement que pour afficher une information sur une cellule de cristal liquide, il faut appliquer à une ligne (L1 par exemple) et une colonne (K1 par exemple) des potentiels appropriés rendant conducteur le transistor T11 qui applique alors un potentiel à l'électrode E11 de telle façon que les électrodes E11 et F11 de la cellule CL11 soient soumises à une différence de potentiel permettant un changement d'état du cristal liquide la cellule CL11.

Pour que cet écran fonctionne convenablement, il faut qu'il n'existe aucun contact entre les conducteurs de ligne L1, L2 et les conducteurs de colonne K1, K2, K3. Comme on peut le voir sur la figure 3, il faut donc que ces conducteurs soient convenablement isolés pour éviter ces contacts soit directement au niveau des points de croisement, soit par l'intermédiaire du cristal liquide.

Pour éviter des croisements entre conducteurs de ligne et conducteurs de colonne il est connu, comme cela est décrit dans la demande de brevet français N° 2 553 218 publiée le 12 avril 1985, de dédoubler les conducteurs de ligne.

Une telle solution est représentée en figure 2. On retrouve sur cette figure le réseau de conducteurs de ligne L1 et L2, la matrice de transistors T11, T12, T21, T22 et la matrice d'électrodes E11, E12, E21, E22. En plus de ces éléments agencés sur une face 10 d'une lame 1 de l'écran à cristal liquide, est disposé un deuxième réseau de conducteurs de ligne L'1, L'2 parallèles aux conducteurs de ligne L1, L2. Les connexions de source connectent alors les sources des transistors à ces conducteurs de ligne L'1 et L'2. C'est ainsi que le transistor T11 a sa grille connectée au conducteur de ligne L1, sa source connectée au conducteur de ligne L'1, son drain donnecté à l'électrode E11.

Sur la face 20 de la deuxième lame 2 de l'écran, les électrodes F11 à F22 sont connectées à des conducteurs de colonnes C1, C2.

Les conducteurs de ligne L'1 et L'2 sont connectés à un potentiel de référence telle que la masse. Le fonctionnement de cet écran et la commande d'une cellule à cristal liquide CL11 se fait par application de potentiels appropriés sur les conducteurs de ligne, tel que L1, et les conducteurs de colonne tel que C1.

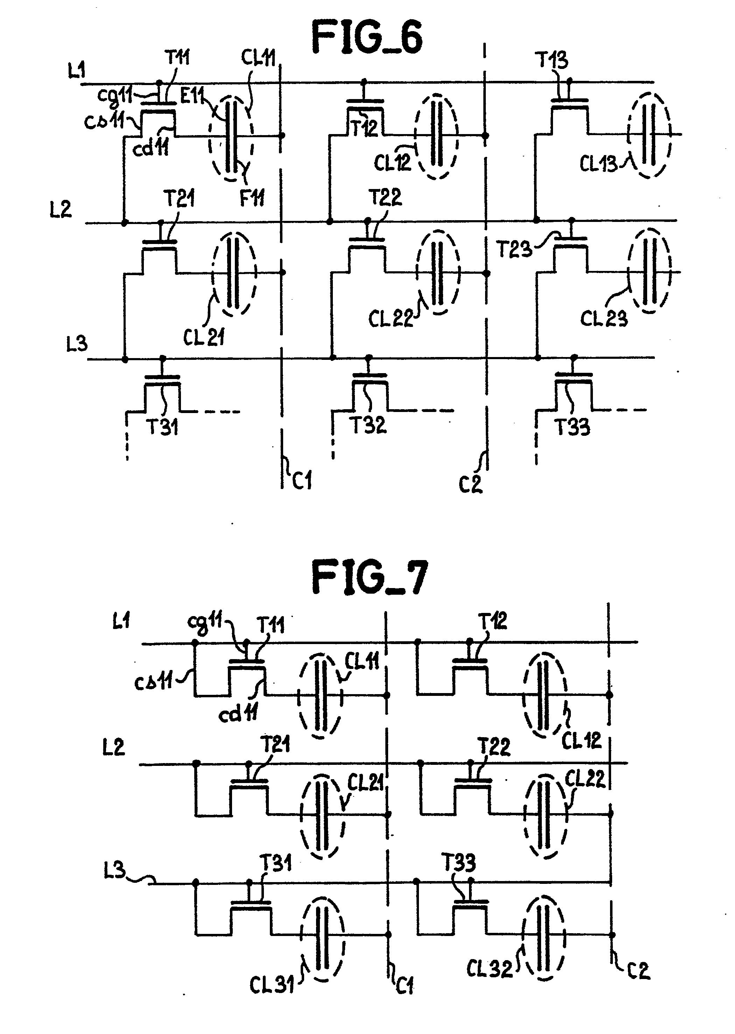

Il est à noter que dans les types d'écrans décrits précédemment, on prévoit à chaque point de croisement un condensateur de stockage permettant d'accroître l'effet mémoire de chaque cellule à cristal liquide. Sur les figures 4 et 5, on a représenté un point de croisement du type d'écran de la figure 1. Sur la figure 4, un condensateur de stockage CK11 a été connecté entre le drain du transistor T11 et le conducteur de ligne L1. Il est possible, comme représenté en figure 5, de connecter un condensateur de stockage CK11 entre le drain du transistor T11 et un conducteur de ligne voisin L2.

Comme on peut le constater dans la description qui précède, la fabrication d'un écran de type connu, nécessite l'implantation sur une même face de l'écran à cristal liquide, soit de réseaux de conducteurs qui se croisent mais isolés les uns des autres, soit de deux réseaux de conducteurs de ligne.

L'invention concerne un écran de visualisation de structure plus simple donc plus facile à réaliser et moins susceptible de défauts de fabrication, donc plus fiable.

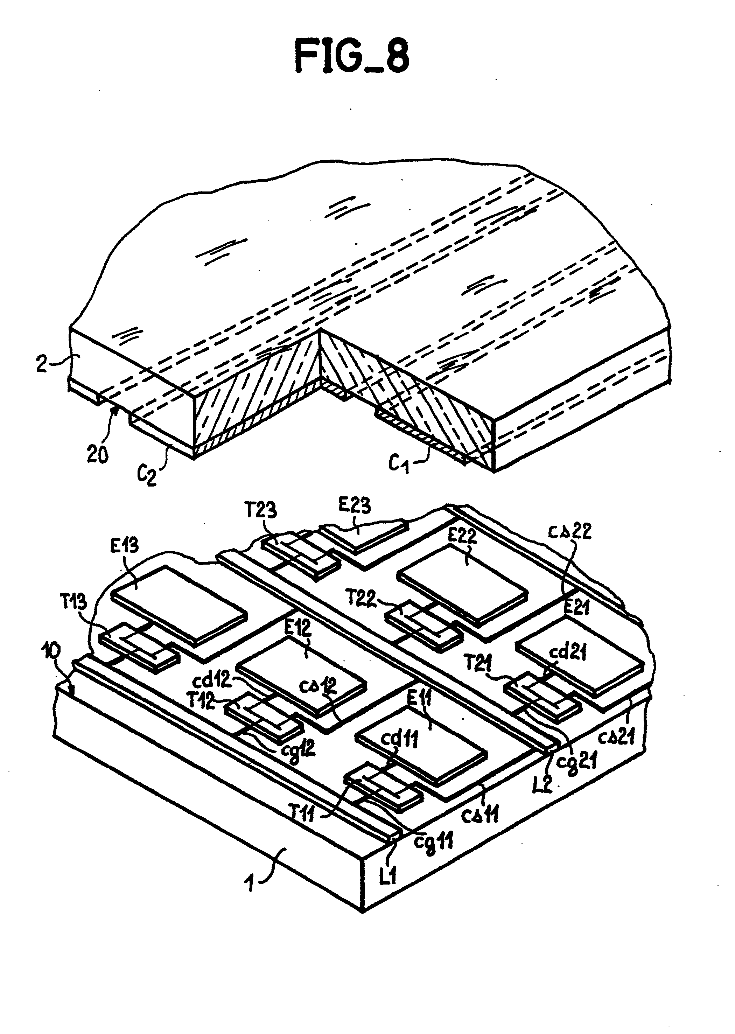

En se reportant aux figures 6 et 8, en va décrire un exemple de réalisation d'un écran selon l'invention.

Cet écran comporte deux lames de verre 1 et 2 disposées parallèlement. Entre ces deux lames de verre 1 et 2 est placé un matériau électrooptique 3 en contact avec les faces 10 et 20 de ces lames.

Sur la face 10 de la lame 1 est disposé une matrice d'électrodes E11 à E23 arrangées en lignes et colonnes. Parallèlement aux lignes d'électrodes sont disposées des conducteurs de lignes L1 à L3.

A chaque électrode est associé un transistor T11 à T33. La grille de chacun des transistors d'une ligne est connectée à un conducteur de ligne associé. La source de ces transistors est connectée à un conducteur de ligne voisin. Le drain de chaque transistor est connecté à l'électrode associée au transistor.

C'est ainsi que la grille du transistor T11 est connectée par une connexion de grille cg11 à un conducteur de ligne L1, que la source de ce transistor est connectée par une connexion de source cs11 au conducteur de ligne suivante L2 et que le drain est connecté à une électrode E11 par une connexion de drain cd 11.

La face 20 de la lame 2 porte des électrodes situées en regard des électrodes E11 à E23. Sur la figure 6, on a représenté une électrode, telle que F11, en face de chaque électrode E11 à E23. Un couple d'électrodes tel que E11 - F11 et le cristal liquide situé entre ces électrodes constitue une cellule à cristal liquide CL11. Les électrodes de la face 20 constituant une même colonne sont connectées à un conducteur de colonne C1, C2.

Sur la figure 8, les électrodes de la face 20 sont réalisées sous forme d'électrodes allongées C1, C2 correspondant chacune à une colonne d'électrodes de la face 10. Chaque électrode C1, C2 tient donc lieu également de conducteur de colonne.

La commande d'une cellule, CL11 par exemple, se fait par application d'un potentiel de commande de grille Vg sur une ligne, L1 selon l'exemple puis, d'un potentiel d'alimentation de source Vs sur la ligne de rang suivant, donc la ligne L2 selon le même exemple. Par ailleurs, un potentiel de drain est appliqué sur le conducteur de colonne (ou électrode de colonne) C1.

A titre d'exemple, un transistor tel que T11 devient conducteur pour un potentiel de grille d'environ Vg = 15 volts et pour une tension drain-source d'environ Vd-Vs = 5 volts.

Le fonctionnement d'une cellule implique que la commande d'une ligne de cellules empêche la commande des lignes de cellules voisines en raison du fait que les différents transistors sont connectés entre deux conducteurs de lignes. Cela impose un fonctionnement séquentiel de l'écran de l'invention, c'est-à-dire une commande séquentielle des différentes lignes de l'écran.

Par ailleurs, bien que cela ne soit pas représenté sur les figures, il est possible de connecter, pour chaque transistor, un condensateur de stockage entre la connexion de drain cd 11 du transistor et le conducteur de ligne L1 auquel est connecté son conducteur de grille ou bien, au conducteur de ligne L2 auquel est connecté son conducteur de source.

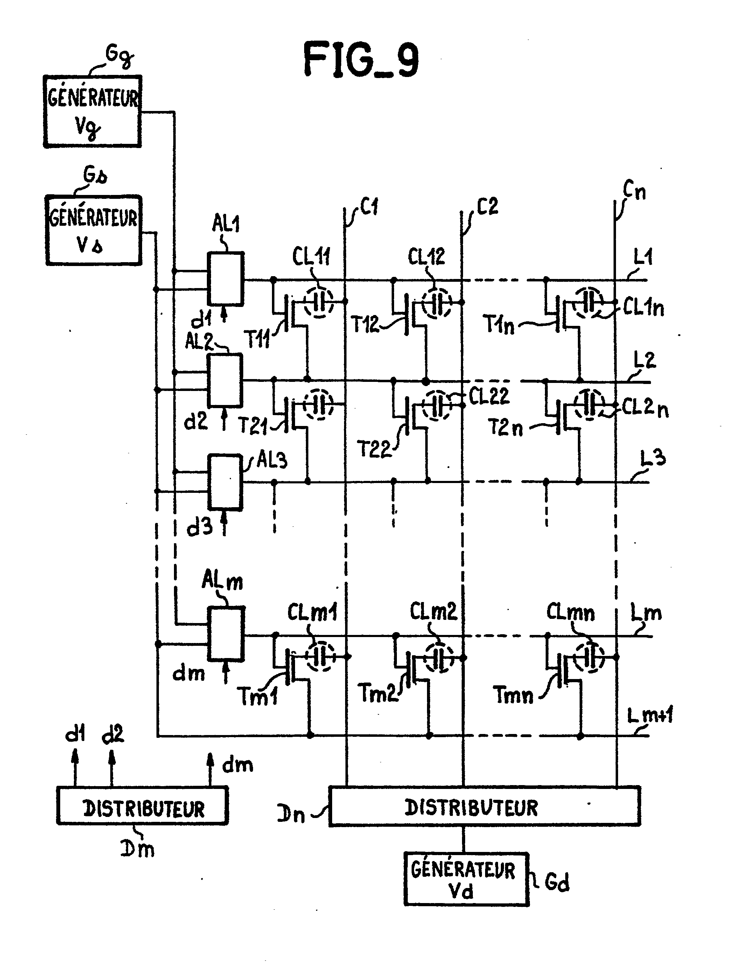

En se reportant à la figure 9, on va donc maintenant décrire des circuits permettant de mettre en oeuvre l'écran de l'invention.

Sur cette figure, on a représenté un écran comportant une matrice de m × n cellules arrangées en m lignes et n colonnes. A ces cellules sont associés m × n transistors T11 à Tmn.

La commande de ces cellules se fait à l'aide de m+1 conducteurs de lignes L1 à Lm+1 et n conducteurs de colonnes C1 à Cn.

Trois générateurs Gg, Gs et Gd fournissent respectivement des potentiels de grille, de seuil et de drain appropriés pour la conduction des transistors.

Les générateurs Gg et Gs sont connectables aux conducteurs de lignes L1 à Lm par des circuits de connexion AL1 à ALm. Un circuit de connexion AL1 à ALm connecte le générateur Gg au conducteur de ligne correspondant lorsqu'il reçoit un signal de commande de niveau 1 sur son entrée d1. Lorsqu'il reçoit un signal de niveau O au lieu d'un signal de niveau 1, il connecte à la place le générateur Gs au conducteur de ligne.

Un distributeur Dm fournit un signal de niveau 1 sur une seule sortie d1 à dm. Il fournit ce signal successivement sur toutes les sorties d1 à dm. Lorsqu'il fournit un signal de niveau 1 sur une sortie, il fournit un signal de niveau O sur toutes les autres sorties. Un seul circuit de connexion AL1 à ALm à la fois connecte donc le générateur Gg à un conducteur de ligne tandis que les autres circuits de connexion connectent le générateur Gs aux autres conducteurs de ligne.

Un générateur Gd permet d'alimenter simultanément sous différents niveaux de tension les conducteurs de colonnes déterminant ainsi la commande de transistors et des cellules associées sous différents niveaux de tension.

Le circuit de la figure 9 permet ainsi de réaliser une commande séquentielle ligne par ligne de l'écran. Par exemple, lorsque le distributeur Dm fournit un signal de niveau 1 sur sa sortie d1 et un signal de niveau 0 sur toutes ses autres sorties, seul le circuit de connexion A11 connecte le générateur Gg au conducteur de ligne L1, les autres circuits de connexion, et notamment AL2, connectent le générateur Gs aux autres conducteurs de ligne L2 à Lm. Le conducteur de ligne L1 est au potentiel Vg et les autres conducteurs de lignes sont tous au potentiel Vs.

Le distributeur Dn fournit à chaque conducteur de colonne, un potentiel de commande particulier fourni par le générateur Gd. Les cellules de la lignes L1 sont ainsi commandées chacune sous un niveau de tension particulier.

Les transistors T11 et T12 situés aux points de croisement du conducteur de ligne L1 et des conducteurs de colonnes C1 et C2 commandés sont rendus conducteurs et les cellules associées CL11 et CL12 changent d'état.

Le distributeur Dm fournit ensuite un signal de niveau 1 sur la sortie d2. Le circuit de connexion AL2 connecte le générateur Gg au conducteur de ligne L2, tandis que le générateur Gs est connecté aux autres conducteurs de ligne. Le distributeur Dn connecte le générateur Gd aux conducteurs de colonne C1 à Cn appropriés déterminant la commande de cellules connectées au conducteur de ligne L2.

La matrice de l'écran est ainsi explorée ligne par ligne.

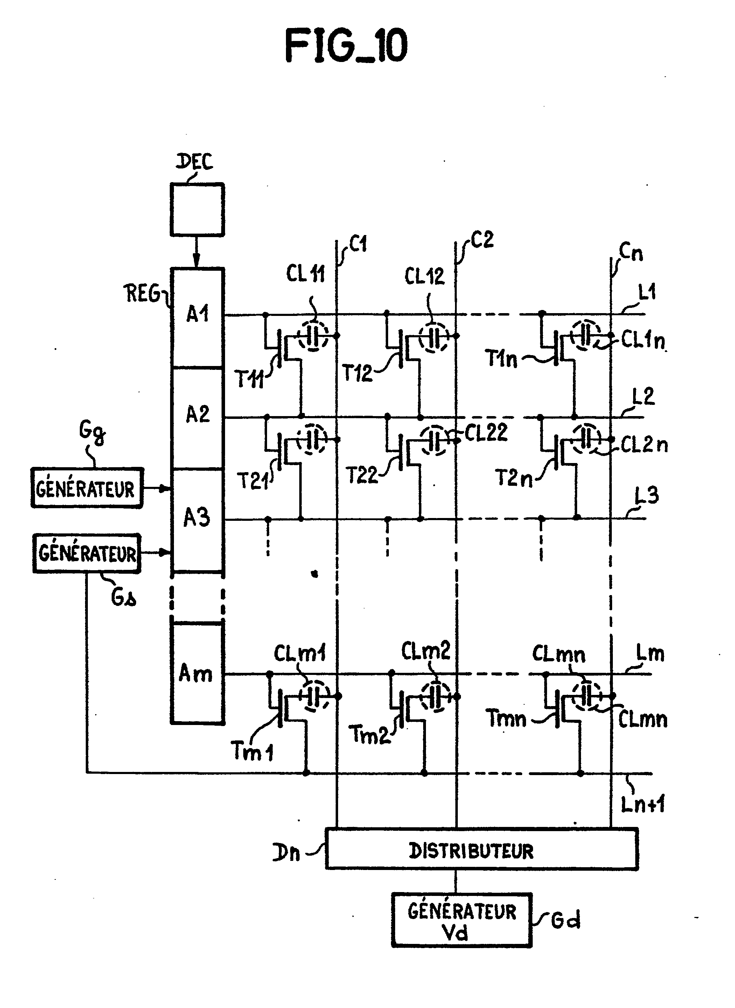

La distribution des commandes de connexion aux circuits de connexion AL1 à ALm peut être réalisée simplement, comme cela est représenté en figure 10, à l'aide d'un registre à décalage REG.

Ce registre REG comporte autant d'étages A1 à Am qu'il y a de conducteurs de ligne. Il est alimenté par un générateur Gg fournissant un potentiel de grille Vg et un générateur Gs fournissant un potentiel de seuil Vs.

Un conducteur de ligne L1 à Lm est connecté à chaque étage A1 à Am. Lorsqu'un étage est à l'état 0, il fournit un potentiel de source Vs sur le conducteur de ligne qui lui est connecté. Lorsqu'un étage est à l'état 1, il fournit un potentiel de grille sur le conducteur de ligne.

Un circuit de commande DEC fournit un signal de niveau logique 1 à une entrée du premier étage et commande son décalage dans les étages successifs du registre, commandant l'alimentation du potentiel Vg sur les conducteurs de ligne successifs L1 à Lm, un seul conducteur de ligne à la fois étant au potentiel Vg tandis que les autres sont au potentiel Vs. L'alimentation par le générateur Gd et le distributeur Dn, des conducteurs de colonne C1 à Cn est réalisée comme décrite en se reportant à la figure 9. On réalise ainsi une commande séquentielle ligne par ligne de l'écran.

Selon une variante de l'invention, les sources des transistors d'une ligne de la matrice de l'écran au lieu d'être connectées au conducteur de ligne de rang suivant, sont connectées au même conducteur de ligne que les grilles des mêmes transistors. On obtient alors une matrice telle que représentée en figure 7.

Dans ce mode de réalisation, le potentiel de commande appliqué à un conducteur de ligne pourra être d'environ Vg = 15 volts, tandis que le potentiel de commande appliqué à un conducteur de colonne sera alors nettement inférieur tel que Vd = 5 volts environ.

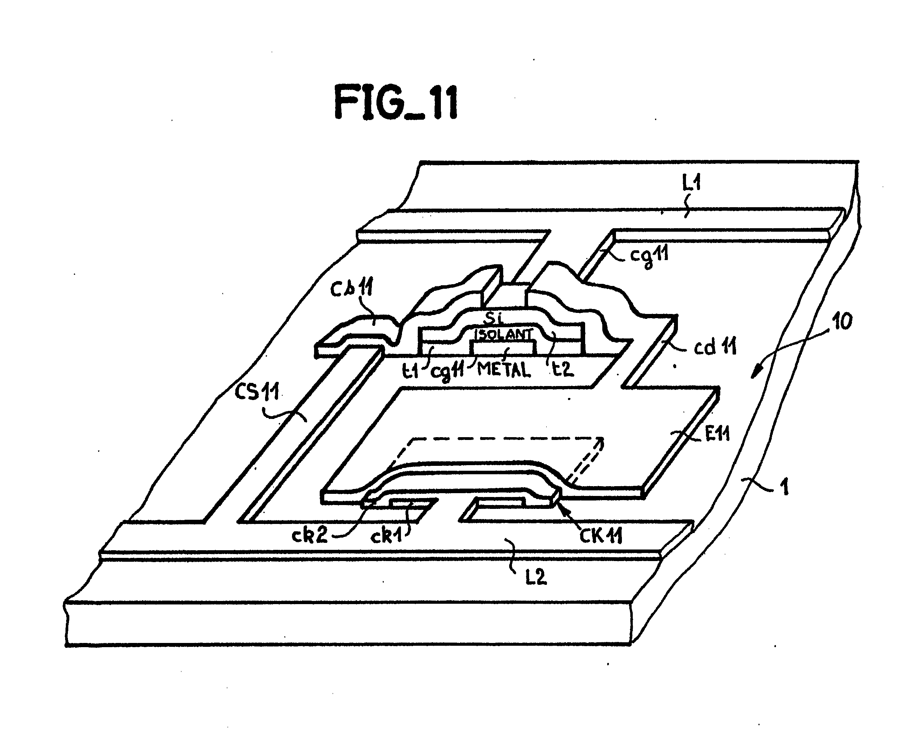

Un point de croisement selon l'invention et son transistor tel que T11 peuvent être réalisés comme cela est représenté à titre d'exemple en figure 11.

Sur cette figure 11 on retrouve les conducteurs de lignes L1 et L2 ainsi que l'électrode E11 disposés sur la face 10 de la plaque 1.

Un conducteur métallique ou connexion de grille cg11 est connecté au conducteur de ligne L1. Sur cette connexion de grille et transversalement sont déposées successivement une couche t1 de matériau isolant, une couche t2 de semiconducteur tel que du silicium amorphe non dopé.

Par ailleurs, un autre conducteur métallique CS11 est connecté au conducteur de ligne L2.

Un conducteur métallique ou connexion de source cs11 permet de connecter le conducteur métallique CS11 à la couche t2 de semiconducteur.

De même, un autre conducteur métallique ou connexion de drain cd11 permet de connecter l'électrode E11 à la couche t2 de semiconducteur réalisant ainsi le canal du transistor.

Le point de croisement de l'invention est ainsi réalisé.

Par ailleurs, sur la figure 11 on a représenté la réalisation d'une capacité de stockage CK11 intégrée au dispositif de l'invention. Pour cela, avant dépôt de l'électrode E11, un élément conducteur ck1 connecté au conducteur de ligne L2 est prévu sur la face 10 de la plaque 1. L'élément conducteur ck1 est revêtu d'une couche d'un matériau isolant ck2. Sur cet ensemble élément conducteur ck1 et isolant ck2 est déposé l'électrode E11 pour constituer une capacité de stockage.

Il est à noter que selon les exemples de réalisation décrits précédemment, on a prévu de connecter les sources des transistors à des conducteurs de ligne tandis que les drains sont connectés à des conducteurs de colonnes. Ces connexions pourraient être inversées, étant entendu que les sens d'alimentation seraient alors eux aussi inversés.

## Revendications

1. Ecran de visualisation électrooptique à transistors de commande comportant :
- une première et une deuxième lames parallèles (1, 2) enserrant un matériau électrooptique (3) ;
- la première lame (1) étant munie sur sa face (10) en contact avec le matériau électrooptique (3) d'une matrice d'électrodes (E11 à E22) arrangées en lignes et colonnes, de conducteurs de commande de ligne (L1, L2) à raison d'un conducteur associé à chaque ligne d'électrodes de ladite matrice et disposé parallèlement à chaque ligne d'électrodes, et de transistors de commande (T11 à T22) à raison d'un transistor par électrode (E11 à E22) couplant celle-ci audit conducteur de commande de ligne ;
- la deuxième lame (2) étant munie sur sa face (20) en contact avec le matériau électrooptique (3) de conducteurs de colonnes (C1, C2) correspondant chacun à une colonne de la matrice d'électrodes de la face (10) de la première lame (1) ;
- chaque transistor de commande (T11) possédant au moins un drain (cd11), une grille (cg11) et une source (cs11), l'écran de visualisation étant en outre muni de circuits d'alimentation desdits drain (Gd), grille (Gg) et source (Gs), caractérisé en ce que chaque transistor de commande (T11) a son drain (cd11) connecté à une électrode (E11) d'une première ligne de la première matrice, sa grille (cg11) connectée au conducteur de commande de ladite première ligne (L1) associé à ladite ligne d'électrodes et que la source (cs11) est connectée à un conducteur de commande d'une deuxième ligne (L2) voisin du précédent ; et qu'il comporte :
- un circuit séquentiel d'alimentation de ligne (Dm) permettant de connecter, à chaque instant, le circuit d'alimentation de grille (Gg) à un conducteur de commande de ligne (L1) tandis que le circuit d'alimentation de source (Gs) est connecté audit conducteur de commande de ligne voisin (L2), ainsi qu'un circuit de connexion (Dn) permettant de connecter le circuit d'alimentation de drain (Gd) aux électrodes de colonnes (C1, C2).

2. Ecran de visualisation électrooptique à transistors de commande comportant :
- une première et une deuxième lames parallèles (1, 2) enserrant un matériau électrooptique (3) ;
- la première lame (1) étant munie sur sa face (10) en contact avec le matériau électrooptique (3) d'une matrice d'électrodes (E 11 à E22) arrangées en lignes et colonnes, de conducteurs de commande de ligne (L1, L2) à raison d'un conducteur associé à chaque ligne d'électrodes dela matrice et disposé parallèlement à chaque ligne d'électrodes, et de transistors de commande (T11 à T22) à raison d'un transistor par électrode (E11 à E22) couplant celle-ci audit conducteur de commande de ligne ;
- la deuxième lame (2) étant munie sur sa face (20) en contact avec le matériau électrooptique (3) de conducteurs de colonnes (C1, C2) correspondant chacun à une colonne de la matrice d'électrodes de la face (10) de la première lame (1), caractérisé en ce que chaque transistor de commande (T11) a son drain (cd11) connecté à une électrode (E11) d'une ligne de la première matrice, et sa grille (cg11) ainsi que sa source (cs11) connectées au conducteur de ligne (L1) associé à ladite ligne d'électrodes.

3. Ecran de visualisation électrooptique selon la revendication 1, caractérisé en ce que le circuit de connexion (Dn) connecte, aux électrodes de colonne (C1, C2), différents niveau d'alimentation fournis par le circuit d'alimentation (Gd).

4. Ecran de visualisation électrooptique selon la revendication 1, caractérisé en ce que le circuit séquentiel d'alimentation (Dm) de ligne permet de connecter successivement le circuit d'alimentation de grille (Gg) à un conducteur de commande de ligne (L1), les autres conducteurs de commande de ligne (L1) étant alors connectés au circuit d'alimentation de source (Gs).

5. Ecran de visualisation électrooptique selon la revendication 4 , caractérisé en ce que le circuit séquentiel comporte :
- un registre à décalage (REG) comportant autant d'étages (A1 à Am), avec chacun une sortie, qu'il y a de conducteurs de commande de ligne (L1 à Lm), un conducteur de commande de ligne étant connecté à chacune desdites sorties ;
- ainsi qu'un circuit de commande (DEC) commandant le décalage d'une information déterminée dans les différents étages du registre à décalage, chaque étage fournissant ledit courant d'alimentation de grille lorsqu'il contient ladite information et, ledit courant d'alimentation de source lorsqu'il ne contient pas ladite information.

6. Ecran de visualisation électrooptique selon la revendication 1, caractérisé en ce que chaque transistor (T11) comporte :
- une connexion de grille (cg11) connectée à un conducteur de ligne (L1) ;
- un élément transistor disposé transversalement à ladite connexion de grille (cg11) et comprenant au moins une couche (t1) en matériau isolant, une couche (t2) en matériau semi-conducteur ;
- une première connexion (cs11) permettant de connecter la couche (t2) de matériau semiconducteur audit conducteur de ligne voisin (L2) ainsi qu'une deuxième connexion (cd11) permettant de connecter également la couche (t2) de matériau semiconducteur à l'électrode (E11) tout en constituant avec la première connexion un canal de transistor.

7. Ecran de visualisation électrooptique selon la revendication 6, caractérisé en ce que la première connexion (cs11) est une connexion de source et la deuxième connexion (cd11) est une connexion de drain.

8. Ecran de visualisation électrooptique selon la revendication 6, caractérisé en ce que la première connexion (cs11) est une connexion de drain et la deuxième connexion (cd11) est une connexion de source.

9. Ecran de visualisation électrooptique selon la revendication 1, caractérisé en ce qu'il comporte, pour chaque transistor, un condensateur de stockage connectant le drain du transistor audit conducteur de commande de ladite première ligne (L1).

10. Ecran de visualisation électrooptique selon la revendication 1, caractérisé en ce qu'il comporte, pour chaque transistor, un condensateur de stockage connectant le drain du transistor audit conducteur de commande de ladite deuxième ligne (L2).

**Patentansprüche**

1. Elektrooptischer Anzeigeschirm mit Steuertransistoren und mit folgenden Komponenten:
– einer ersten und einer zweiten dazu parallelen Scheibe (1, 2), die ein elektrooptisches Material (3) zwischen sich einschließen,
– wobei die erste Scheibe (1) auf ihrer mit dem elektrooptischen Material (3) in Berührung stehenden Seite (10) mit einer in Zeilen und Spalten gegliederten Elektrodenmatrix (E11 bis E22), mit Zeilensteuerleitern (L1, L2), nämlich je einem pro Elektrodenzeile der Matrix und parallel zu den Elektrodenzeilen angeordnet, sowie mit Steuertransistoren (T11 bis T22), nämlich je einem Transistor pro Elektrode (E11–E22) versehen ist, der diese mit dem Zeilensteuerleiter verbindet,
– wobei die zweite Scheibe (2) auf ihrer mit dem elektrooptischen Material (3) in Berührung stehenden Seite (20) mit Spaltenleitern (C1, C2) versehen ist, die je einer Spalte der Elektrodenmatrix auf der Seite (10) der ersten Scheibe (1) zugeordnet sind,
– wobei jeder Steuertransistor (T11) mindestens einen Drain (cd11), ein Gate (cg11) und eine Source (cs11) aufweist, und der Anzeigeschirm weiter mit Versorgungsschaltungen (Gd, Gg, Gs) jeweils für den Drain, das Gate und die Source versehen ist, dadurch gekennzeichnet, daß bei jedem Steuertransistor (T11) der Drain (cd11) an eine Elektrode (E11) einer ersten Zeile der ersten Matrix, das Gate (cg11) an den Steuerleiter der mit dieser Elektrodenzeile verbundenen ersten Zeile (L1) und die Source (cs11) mit einem Steuerleiter einer zweiten Zeile (L2), die der vorerwähnten benachbart ist, verbunden ist, und daß der Anzeigeschirm weiter aufweist:
– eine Folgeschaltung (Dm) für die Zeilenversorgung, die es ermöglicht, jederzeit die Gate-Versorgungsschaltung (Gg) mit einem Zeilensteuerleiter (L1) zu verbinden, während die Source-Versorgungsschaltung (Gs) mit dem benachbarten Zeilensteuerleiter (L2) verbunden wird, sowie eine Verbindungsschaltung (Dn), die es ermöglicht, die Drain-Versorgungsschaltung (Gd) mit den Spaltenelektroden (C1, C2) zu verbinden.

2. Elektrooptischer Anzeigeschirm mit Steuertransistoren und mit folgenden Komponenten:
– einer ersten und einer zweiten dazu parallelen Scheibe (1, 2), die ein elektrooptisches Material (3) zwischen sich einschließen,
– wobei die erste Scheibe (1) auf ihrer mit dem elektrooptischen Material (3) in Berührung stehenden Seite (10) mir einer in Zeilen und Spalten gegliederten Elektrodenmatrix (E11 bis E22), mit Zeilensteuerleitern (L1, L2), nämlich je einem pro Elektrodenzeile der Matrix und parallel zu den Elektrodenzeilen angeordnet, sowie mit Steuertransistoren (T11 bis T22), nämlich je einem Transistor pro Elektrode (E11–E22) versehen ist, der diese mit dem Zeilensteuerleiter verbindet,
– wobei die zweite Scheibe (2) auf ihrer mit dem elektrooptischen Material (3) in Berührung stehenden Seite (20) mit Spaltenleitern (C1, C2) versehen ist, die je einer Spalte der Elektrodenmatrix auf der Seite (10) der ersten Scheibe (1) zugeordnet sind, dadurch gekennzeichnet, daß bei jedem Steuertransistor (T11) der Drain (cd11) an eine Elektrode (E11) einer Zeile der ersten Matrix und das Gate (cg11) sowie die Source (cs11) an den Zeilenleiter (L1) angeschlossen sind, der dieser Elektrodenzeile zugeordnet ist.

3. Elektrooptischer Anzeigeschirm nach Anspruch 1, dadurch gekennzeichnet, daß die Verbindungsschaltung (Dn) unterschiedliche, von der Versorgungsschaltung (Gd) gelieferte Versorgungspegel an die Spaltenelektroden (C1, C2) anschliesst.

4. Elektrooptischer Anzeigeschirm nach Anspruch 1, dadurch gekennzeichnet, daß die Zeilenfolgeschaltung (Dm) es nacheinander ermöglicht, die Gate-Versorgungsschaltung (Gg) an einen Zeilensteuerleiter (L1) anzuschließen, während die anderen Zeilensteuerleiter (L1) mit der Source-Versorgungsschaltung (Gs) verbunden sind.

5. Elektrooptischer Anzeigeschirm nach Anspruch 4, dadurch gekennzeichnet, daß die Folgeschaltung aufweist:
– ein Schieberegister (REG) mit ebensovielen Stufen (A1 bis Am) mit jeweils einem Ausgang, wie es Zeilensteuerleiter (L1 bis Lm) gibt, wobei ein Zeilensteuerleiter mit jedem der genannten Ausgänge verbunden ist,
– sowie eine Steuerschaltung (DEC), die die Verschiebung einer bestimmten Information durch die verschiedenen Stufen des Schieberegisters steuert, wobei jede Stufe den Gateversorgungsstrom liefert, wenn sie die genannte Information enthält, sowie den Sourceversorgungsstrom, wenn sie die genannte Information nicht enthält.

6. Elektrooptischer Anzeigeschirm nach Anspruch 1, dadurch gekennzeichnet, daß jeder Transistor (T11) folgende Komponenten aufweist:
– einen Anschluß für das Gate (cg11), der an einen Zeilenleiter (L1) angeschlossen ist,
– ein Transistorelement, das quer zum Gateanschluß (cg11) angeordnet ist und mindestens eine Schicht (t1) aus Isoliermaterial sowie eine Schicht (t2) aus Halbleitermaterial aufweist,
– einen ersten Anschluß (cs11), der es ermöglicht, die Schicht (t2) aus Halbleitermaterial mit dem benachbarten Zeilenleiter (L2) zu verbinden, sowie einen zweiten Anschluß (cd11), der es ermöglicht, ebenfalls die Schicht (t2) aus Halbleitermaterial mit der Elektrode (E11) zu verbinden, wobei er mit dem ersten Anschluß einen Transistorkanal bildet.

7. Elektrooptischer Anzeigeschirm nach Anspruch 6, dadurch gekennzeichnet, daß der erste Anschluß (cs11) ein Sourceanschluß, und der zweite Anschluß (cd11) ein Drainanschluß ist.

8. Elektrooptischer Anzeigeschirm nach Anspruch 6, dadurch gekennzeichnet, daß der erste Anschluß (cs11) ein Drainanschluß, und der zweite Anschluß (cd11) ein Sourceanschluß ist.

9. Elektrooptischer Anzeigeschirm nach Anspruch 1, dadurch gekennzeichnet, daß er für jeden Transistor einen Speicherkondensator besitzt, der den Drain des Transistors mit dem Steuerleiter der ersten Zeile (L1) verbindet.

10. Elektrooptischer Anzeigeschirm nach Anspruch 1, dadurch gekennzeichnet, daß er für jeden Transistor einen Speicherkondensator besitzt, der den Drain des Transistors mit dem Steuerleiter der zweiten Zeile (L2) verbindet.

## Claims

1. An electro-optical display screen with control transistors, comprising:
– a first plate (1) and a second plate (2) parallel with the first, the plates enclosing an electro-optical material (3),
– the first plate (1) being supplied, at its face (10) in contact with the electro-optical material (3), with a matrix of electrodes (E11 to E22) arranged in lines and columns, with line control conductors (L1, L2) each conductor being respectively allocated to one electrode line of said matrix and being disposed parallel to each electrode line, and with control transistors (T11 to T22), each transistor being respectively allocated to one electrode (E11 to E22) arranged to couple said electrode to said line control conductor,
– the second plate (2) being supplied at its face (20) in contact with the electro-optical material (3) with column conductors (C1, C2), each corresponding respectively to one column of the matrix of electrodes on said face (10) of the first plate (1),
– each control transistor (T11) having at least a drain (cd11), a gate (cg11) and a source (cs11), the display screen being further provided with feed circuits (Gd, Gg, Gs) respectively for said drain, gate and source, characterized in that each control transistor (T11) has its drain (cd11) connected to an electrode (E11) of a first line of the first matrix, its gate (cg11) connected to the control conductor of said first line (L1) associated with said electrode line and the source (cs11) connected to a control conductor of a second line (L2) neighbouring the preceding one, and that the screen further comprises:
a sequential line feed circuit (Dm) allowing to connect the gate feed circuit (Gg) at any time to a line control conductor (L1), whereas the source feed circuit (Gs) is connected to said neighbouring line control conductor (L2), as well as a connection circuit (Dn) allowing to connect the drain feed circuit (Gd) to the column electrodes (C1, C2).

2. An electro-optical display screen with control transistors, comprising:
– a first plate (1) and a second plate (2) parallel with the first, the plates enclosing an electro-optical material (3),
– the first plate (1) being supplied, at its face (10) in contact with the electro-optical material (3), with a matrix of electrodes (E11 to E22) arranged in lines and columns, with line control conductors (L1, L2), each conductor being respectively allocated to one electrode line of said matrix and being disposed parallel to each electrode line, and with control transistors (T11 to T22), each transistor being respectively allocated to one electrode (E11 to E22) arranged to couple said electrode to said line control conductor,
– the second plate (2) being supplied at its face (20) in contact with the electro-optical material (3) with column conductors (C1, C2), each corresponding respectively to one column of the matrix of electrodes on said face (10) of the first plate (1), characterized in that each control transistor (T11) has its drain (cd11) connected to an electrode (E11) of a line of the first matrix and its gate (cg11) as well as its source (cs11) connected to the line conductor (L1) associated with said line electrodes.

3. An electro-optical display screen according to claim 1, characterized in that the connection circuit (Dn) applies different feed levels provided by the feed circuit (Gd) to the column electrodes (C1, C2).

4. An electro-optical display screen according to claim 1, characterized in that the sequential line feed circuit (Dm) allows to connect successively the gate feed circuit (Gg) to a line control conductor (L1), whereas the other line control conductors (L1) are connected to the source feed circuit (Gs).

5. An electro-optical display screen according to claim 4, characterized in that the sequential circuit comprises:
– a shift register (REG), comprising as many stages (A1 to Am) with individual outputs as there are line control conductors (L1 to Lm), one line control conductor being connected to any one of said outputs,
– and a control circuit (DEC) adapted to control shifting of a given information through the different stages of the shift register, each stage delivering said gate feed current, when it contains said information, and said source feed current, when it does not contain said information.

6. An electro-optical display screen according to claim 1, characterized in that each transistor (T11) comprises:
– a gate connection (cg11) with a line conductor (L1),
– a transistor element disposed traversely to said gate connection (cg11) and comprising at least one layer (t1) of insulating material, and one layer (t2) of semiconductor material,
– a first connection (cs11) intended to connect the layer (t2) of semiconductor material with said neighbouring line conductor (L2) as well as a second connection (cd11) intended to connect also the layer (t2) of semiconductor material with the electrode (E11), while constituting a transistor channel with the first connection.

7. An electro-optical display screen according to claim 6, characterized in that the first connection (cs11) is a source connection and the second connection (cd11) is a drain connection.

8. An electro-optical display screen according to claim 6, characterized in that the first connection (cs11) is a drain connection and the second connection (cd11) is a source connection.

9. An electro-optical display screen according to claim 1, characterized in that it comprises for each transistor a storage capacitor connecting the drain of the transistor to said control conductor of said first line (L1).

10. An electro-optical display screen according to claim 1, characterized in that it comprises for each transistor a storage capacitor connecting the drain of the transistor to said control conductor of said second line (L2).

# FIG_1

# FIG_2

# FIG_3

# FIG_4

# FIG_5

# FIG_6

# FIG_7

# FIG_8

# FIG_9

# FIG_10

FIG_11